(19)

Europäisches Patentamt

European Patent Office

Office européen des brevets

(11) **EP 4 063 679 B1**

(12) **EUROPEAN PATENT SPECIFICATION**

(45) Date of publication and mention
of the grant of the patent:
**02.10.2024 Bulletin 2024/40**

(21) Application number: **21164089.1**

(22) Date of filing: **22.03.2021**

(51) International Patent Classification (IPC):
*F16C 33/34* (2006.01)    *F16C 33/58* (2006.01)
*F16C 33/62* (2006.01)    *F16C 33/64* (2006.01)
*F16C 33/30* (2006.01)    *F16C 19/26* (2006.01)
*F16C 19/36* (2006.01)

(52) Cooperative Patent Classification (CPC):
**F16C 33/34; F16C 33/306; F16C 33/585;
F16C 33/62; F16C 33/64;** F16C 19/26;
F16C 19/364; F16C 2300/12

(54) **ROTATIONAL GUIDANCE MICROSYSTEM WITH NON-CIRCULAR ROLLING ELEMENTS**

ROTATIONSFÜHRUNGSMIKROSYSTEM MIT UNRUNDEN WÄLZELEMENTEN

MICROSYSTÈME DE GUIDAGE ROTATIONNEL COMPRENANT DES ÉLÉMENTS ROULANTS
NON CIRCULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.09.2022 Bulletin 2022/39**

(73) Proprietor: **Meilleur Temps
2000 Neuchâtel (CH)**

(72) Inventor: **SEMON, Guy
2000 Neuchâtel (CH)**

(74) Representative: **IP Trust
2, rue de Clichy
75009 Paris (FR)**

(56) References cited:
**CN-A- 102 213 263      JP-A- 2011 133 000
US-A- 1 295 855      US-A1- 2010 297 391
US-A1- 2014 270 936**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Technical field</u>

The present invention relates to rotational guidance systems, and more particularly, to rotational guidance microsystems with non-circular rolling elements.

<u>Background</u>

A bearing is a machine element that constrains relative motion to only the desired motion. When two rigid bodies do not interact with each other, they have six relative degrees of freedom (DoF). As they are coupled with a bearing, five out of six DoF are canceled, leaving only a free rotation around a given rotational axis between the two bodies. The DoF that are constrained are the ones through which load can be transmitted. A rolling-element bearing holds rotating components such as shaft or axles within mechanical systems, and transfer an axial and a radial force as well as a torque around an axis perpendicular to the rotational axis. The rolling-element bearing carries rolling elements, such as balls, cylinders, rollers or needles, between two bearing rings called races. The choice of rolling elements and the races is always based on radial, axial or combined loading conditions so that the components of the bearing always have circular shape, which represents axial and radial rotational symmetry. In order to ensure a uniform distribution of the rolling elements around the axis of rotation, a cage is often used. Without it, the rolling elements may slip away due to their circular shape. In some cases, this cage may have disadvantages:

- Friction between the cage and the rolling elements leads to energy losses and may cause mechanical wear, especially when the speed of the rotation is high.
- The manufacture and assembly of the cage can present difficulties, especially on a small scale for microsystems.

For small dimensions, especially below millimeter or micrometer scale, the addition of a cage is either impossible or generates functional disadvantages between increased clearance and friction. Instead of a cage, it is also possible to stack the rolling elements until the backlash is filled. The backlash is a clearance or lost motion in a mechanism caused by gaps between the parts. It can be defined as "the maximum distance or angle through which any part of a mechanical system may be moved in one direction without applying appreciable force or motion to the next part in mechanical sequence". However, when speeds are high, the number of parts in contact can lead to accelerated wear and induce damage conditions, which requires lubrication. Lubrication is not always possible or compatible with the operation of certain system, for example, risks of migration by capillarity in the rest of the mechanism. In addition, lubrication leads to after-sales service constraints.

Indeed, the reutilization of macroscopically satisfied solution of rotational guidance system to the microscopic scale is quite complicated, because the backlash become a predominant problem as well as the embarked masses under the classical loading conditions. It is not possible to have a homothetic reproduction of the work-well solution at the macroscopic scale to the microscopic scale. The backlash and masses are largely oversized compared to the size of the system at the microscopic scale, especially below millimeter or even micrometer scale. For example, in the method of assembling a prestressed ball bearing, the shaft is made slightly larger in dimension to remove the backlash by pre-stressing the balls with a typical deformation of 0.1%-0.2% to remain in the domain of elasticity. If the ball is with a diameter of 1 mm, the tolerance of the shaft should be within micrometer scale, which requires an extremely high dimensional precision.

Because of all these limitations, there is an interest in developing new solutions that can find their applications in mechanical guidance for all microsystems, particularly in watchmaking, micro robotics, medical equipment, space engineering etc. The documents US2010/297391A1 discloses a similar rotational guidance system. .i

<u>Advantage of the invention</u>

We propose a new solution using rolling elements with non-circular cross-section so that slipping between the rolling elements and the races is eliminated even without cage. The removal of cage in the guidance system greatly simplifies the structure, which facilitates the fabrication in the microscopic scale.

The inventive idea is to realize the rotational guidance microsystem in a very small scale, e.g. millimeter or micrometer, with only three kinds of components: center part(1), rolling(2) and peripheral part(3), without additional cage or any other fixing part. The specific non-circular geometrical shapes of the three kinds of components allow to guide the rotational movement without relative slipping. The three components are coplanar and do not represent any risk of desynchronization in position. The advantages are the reduced number of components and the simplified construction schema.

Brief summary of the invention

In a general manner, the invention concerns a rotational guidance microsystem, comprising three kinds of components:

- A center part (1), a peripheral part (3) and at least one rolling element (2),
- the center part and the peripheral part defining a space in-between with the rolling element being mobile in the space between the center part and the peripheral part,
- the center part rotating around a rotational axis, and the at least one rolling element revolving around the rotational axis of the center part,
- the cross-sections of the three-dimensional geometric shapes of the center part, the peripheral part and the said rolling element are coplanar.

The cross-section of the center part and the rolling element has respectively a non-circular two-dimensional shape in the transversal plan that is perpendicular to the rotational axis, the non-circular two-dimensional shapes of the center part and the rolling element are in direct physical contact at a contacting point with the relative velocity being zero at the contacting point, while the cross-section of the rolling element and the peripheral part has respectively a non-circular two-dimensional shape in the transversal plan that is perpendicular to the rotational axis, the non-circular two-dimensional shapes of the rolling element and the peripheral part are in direct physical contact at a contacting point with the relative velocity being zero at the contacting point.

The invention concerns a plurality of variations of the Rotational guidance microsystems, which include the following modes of realization either alone or in combination.

- the three-dimensional geometric shape is a cylinder, the directrix of the cylinder presents a non-circular shape, the generatrix of the cylinder is parallel to the rotational axis and is perpendicular to the plane of the directrix.
- the three-dimensional geometric shape is a segment of a cone, the directrix of the cone presents a non-circular shape, the generatrix of the cone passes through the apex of the cone on the rotational axis.
- the non-circular two-dimensional shape in the transversal plan of each kind of components presents a polygasteroid profile.
- there are three rolling elements positioned symmetrically around the center part, each rolling element being separated by 120°.
- non-contact stoppers are installed on the center part and the rolling element to eliminate the influence from off-plane force.
- the at least one rolling element is made of auxetic material to eliminate clearance.
- the auxetic material is homothetic, who has a Poisson coefficient around -1.
- the three kinds of components are made of flexible elements to realize a function of anti-shock.
- the flexible elements are in auxetic material.
- the three components are made of infiltrated carbon nanotubes array.
- the three components are made by deep etching in a silicon wafer (NEMS, MEMS).
- the three components are made by femtosecond laser sculpturing in steel alloys, titanium alloys, ceramic and glass.

Brief description of the figures

- FIG.1 shows the cross-sectional view in a transversal plan of the rotational guidance microsystem;

  FIG.2 shows the contacting points between the teeth of a pair of intermeshing gears;
  FIG.3 shows the rotational guidance microsystem with three rolling elements being placed around the center part in an equilateral triangle form;
  FIG.4 shows the cross-sectional view in a longitudinal plan of the rotational guidance microsystem;
  FIG.5 shows the cross-sectional view in a transversal plan of the rotational guidance microsystem with hollow rolling elements;
  FIG.6 shows a comparison between the conventional material and the auxetic material under external contraction;
  FIG.7 shows a cross-sectional view in transversal plan of the rotational guidance microsystem with the rolling element made in auxetic material;
  FIG.8 shows the rolling element in auxetic material with homothetic contraction;
  FIG.9 shows mechanical invisibility cloak.

Detailed description of the invention

The invention is not limited to the embodiment (s) described (s) and variant embodiments can be provided without departing from the scope of the invention as defined by the claims.

In a general manner, the invention concerns a rotational guidance microsystem, in which the rolling element rotates without slipping relative to the other components in direct contact with the rolling element. Because there is no slipping, the relative velocity is always zero at the contacting point between the rolling element and the other component. The present invention uses a non-circular shape for the rolling element to avoid its slipping relative to the other components. Adapted to the non-circular shape of the rolling element, the other components that are in direct contact with the rolling element present certain geometrical constraints, which are called conjugate profiles and which provide geometrical confinement to avoid slipping.

Among the multiple geometries of non-circular shape for the rolling elements, we are going to describe, as an example, an embodiment using polygasteroid profiles, because they can have analytical solutions for conjugated profiles.

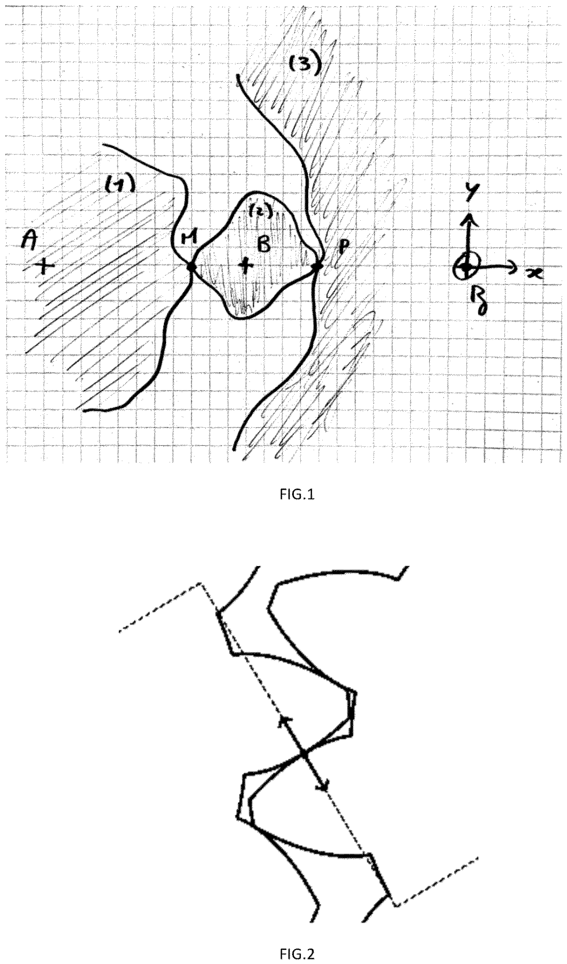

The figure 1 shows the cross-sectional view in a transversal plan of the rotational guidance microsystem composed of three components: a center part (1), a rolling element (2) and a peripheral part (3). The center part (1) and the peripheral part (3) define a space in-between, in which the rolling element (2) is in direct contact with the center part and the peripheral part and is mobile in rotation. The center part rotates around a rotational axis A, which is along the Z direction, while the rolling element (2) revolves around the rotational axis A. During its revolution, the rolling element rotates around the axis B, which is also along the Z direction. The cross-sectional view is represented in a X-Y plane, which is perpendicular to the Z direction and is a transversal plan relative to the rotational axis. The center part (1) is mobile in rotation in a clockwise or counter-clockwise direction relative to the peripheral part (3).

The geometry between each two contacting components requires that the contact is punctual in 2D or rectilinear in 3D without any slipping, which means that when the center part and the rolling element move together, they are always in contact at one and only one point in X-Y plane without relative slipping, this contact point is called M; and that when the rolling element and the peripheral part move together, they are always in contact at one and only one point in X-Y plane without relative slipping, this contact point is called P. In X-Y plane of the figure 1, the points A, M, B and P are aligned, which will be proved by the calculation hereafter. The profile of the center part (1) and the peripheral part (3) are conjugates of the profile of the rolling element (2).

Since the figure 1 shows the cross-sectional view of the rotational guidance microsystem in two dimension (2D), the geometrical requirement between each two contacting components in 2D is a punctual contact. For the rotational guidance microsystem in three dimension (3D), the geometrical requirement between each two contacting components in 3D is a rectilinear contact. In theory there are infinite solutions of the profiles but in the practical case, the means of manufacture and the search for the simplest impose rather elementary and symmetrical forms of the profiles.

Profile Calculation

Each component i (i is an integer number equal to 1, 2 and 3) is represented by a vector $\overrightarrow{\Omega i}$ in the X-Y-Z coordinate:

Equation 1

$$\overrightarrow{\Omega_i} = \frac{\mathrm{d}\theta_i}{\mathrm{d}t}\overrightarrow{e_z} = \omega_i\overrightarrow{e_z} = \begin{bmatrix} 0 \\ 0 \\ \omega_i \end{bmatrix}$$

Omegai = dthetai/dt represents the rotation angular velocity, and $\overrightarrow{ez}$ represents the unit vector along the Z direction in the three-dimensional cartesian coordinate system X-Y-Z. The equation 1 means that each element i has an angular velocity along the Z direction.

The rolling condition without slipping at M results in the following equation 2, which means that the center part (1) and the rolling element (2) have the same linear velocity $\overrightarrow{vM,1/0}$, $\overrightarrow{vM,2/0}$ at the contacting point M, which means that the relative velocity between the center part and the rolling element is zero.

Equation 2

$$\overrightarrow{vM,1/0} = \overrightarrow{vM,2/0}$$

Or the rolling condition without slipping at M results in the following equation 3 by using the Varignon relation.

Equation 3

$$\overrightarrow{MA} \times \overrightarrow{\Omega 1} = \overrightarrow{MB} \times \overrightarrow{\Omega 2}$$

By integrating the equation 1, the equation 3 is rewritten in the following form:

Equation 4

$$\left( \omega_1 \overrightarrow{MA} - \omega_2 \overrightarrow{MB} \right) \times \vec{e_z} = \vec{0}$$

Based on the Equation 4, since the vector product is zero, and since the two factors of the vector product are orthogonal, therefore, we get necessarily the following equation:

Equation 5

$$\omega_1 \overrightarrow{MA} - \omega_2 \overrightarrow{MB} = \vec{0}$$

The equation 5 means the alignment of the points A, M and B. Using the same kind of calculation for the non-slipping rotation of the rolling (2) and the peripheral part (3) at the contact point P, it is proved in the same way that A, B and P are also aligned by the following equation 6.

Equation 6

$$\omega2 \overrightarrow{PB} - \omega3 \overrightarrow{PA} = 0$$

We use x, y and L to represent different lengths in the following way:
X = MB; y = BP, L = AB;
The relation for the non-slipping rotation between the elements can be rewritten as;

Equation 6

$$(L - x)\omega_1 + x\omega_2 = 0$$

$$(L + y)\omega_3 - y\omega_2 = 0$$

For the rolling element (2), its length either x or Y is a function of its angle theta2, which fulfills the following equation:

Equation 8

X(theta2) = y(theta2+pi)

The aim is to determine the profiles of the three components, which respect the preceding relationships. This is equivalent to determining the functions x (θ1), y (θ3) and x (θ2) or y (θ3).

Furthermore, for the reason of simplification, it is assumed that the profile of each component (i) is periodic with a number ni of periodicity, which is represented by the following equation:

$$\text{Equation } 9$$

$$x\left(\theta_i + \frac{2\pi}{n_i}\right) = x(\theta_i)$$

We will assume the profile x (θ2) = f (θ2) of the rolling element (2) known and try to deduce an intrinsic expression for the profiles of the center part (1) and the peripheral part (3).

From the equation 6, it is possible to get the relationship between the angles by getting rid of the time:

$$\text{Equation } 10$$

$$\frac{\omega_1}{\omega_2} = \frac{\mathrm{d}\theta_1}{\mathrm{d}\theta_2} = \frac{x}{x - L}$$

$$\frac{\omega_3}{\omega_2} = \frac{\mathrm{d}\theta_3}{\mathrm{d}\theta_2} = \frac{y}{y + L}$$

$$\theta_1 = \int \frac{x(\theta_2)}{x(\theta_2) - L}\mathrm{d}\theta_2$$

$$\theta_3 = \int \frac{y(\theta_2)}{y(\theta_2) + L}\mathrm{d}\theta_2$$

$$\theta_1 = \int \frac{x}{x - L}\left(\frac{\mathrm{d}x}{\mathrm{d}\theta_2}\right)^{-1}\mathrm{d}x$$

$$\theta_3 = \int \frac{y}{y + L}\left(\frac{\mathrm{d}y}{\mathrm{d}\theta_2}\right)^{-1}\mathrm{d}y$$

In a special case: x is defined as a differential function of θ2:

$$\frac{\mathrm{d}x}{\mathrm{d}\theta_2} = f(x)$$

From equation 8,

$$\frac{\mathrm{d}y}{\mathrm{d}\theta_2} = f(y)$$

Thus, the angles theta 1 and theta 3 as a function of can be written in the following way:

$$\mathrm{d}\theta_1 = \frac{x}{x - L}\frac{1}{f(x)}\mathrm{d}x$$

$$\mathrm{d}\theta_3 = \frac{y}{y + L}\frac{1}{f(y)}\mathrm{d}y$$

In a mode of realization, it is assumed that the rolling element (2) has a polygasteroid profile. The calculation is carried out to determine the corresponding profiles for the center part (1) and the peripheral part (3) .

Profile calculation of the center part

From the Equation 10, we can get the following equation 11:

Equation 11

$$(L - x)\mathrm{d}\theta_1 + x\mathrm{d}\theta_2 = 0$$

The polygasteroid profile of the rolling element (2) is presented by the following equation, with x representing the distance between the points M and B and theta2 is the angle in the polar coordinate:

Equation 12

$$x = \frac{p}{1 + e\cos(n_2\theta_2)}$$

The aim is to find the distance (L-x) as a function of the theta1, which gives the profile of the center part (1). We might add the details of the whole calculation, which gives the following result:

Equation 13

$$L - x = \left[\frac{ep}{1 - e^2}\right]\left[\frac{C^2 - 1}{C - \cos(n_1\theta_1)}\right]$$

This result proves that the polygasteroid profile of the rolling element (2) determines that the conjugate profile of the center part (1) is also in a polygasteroid form.
The same type of calculation is carried out for the peripheral part (3) with the aim to find the distance (L+y) as a function of the theta3, which gives the profile of the peripheral part (3):

$$L + y = \left[ \frac{fp}{1 - f^2} \right] \left[ \frac{E^2 - 1}{E - \cos(n_3\theta_3)} \right]$$

This result proves that the polygasteroid profile of the rolling element (2) determines that the conjugate profile of the peripheral part (3) is also in a polygasteroid form.

The mechanical construction starts with the choice of n1, n2 and n3, which are integer number. It is to reminded that the number ni means the periodicity of the corresponding element. Then, the relation between the scale factors L, p and e is determined.

$$\frac{L}{p} = \frac{1}{4} \left( \frac{n_3^2 - n_1^2}{n_2^2} \right)$$

$$\lambda = \left( \frac{p}{L} \right)^2 \left( \frac{n_3^2 + n_1^2}{2n_2^2} - 1 \right)$$

$$e = \sqrt{1 - \lambda}$$

The above calculation shows that the it is possible to realize a rotational guidance microsystem with only three coplanar components: a center part(1), a rolling(2) and a peripheral part(3), each with a non-circular cross-section. The edge lines of the cross-sections fulfill the conjugate profiles condition. One specific example of the conjugate profile is polygasteroid profile. Both the terms "conjugate profile" and "polygasteroid" are standard mathematical terms, which are well-known for the mathematician. The non-circular cross-sections with conjugate profiles provide geometrical confinement, which allows the three components to rotate relative to each other without slipping at the contact point in ideal case. Under realistic conditions, e.g. shock, there might be minimum slipping before the three components retrieve an equilibrium mechanical position.

In the gear system, there is also a notion of the conjugate profile for the teeth. If the teeth profile of a pair of gears are so designed that a constant angular velocity ration is produced and maintained during the operation, then the gears are said to have conjugate action. Hence the teeth of such gears which perform the conjugate action, are said to have the conjugate profile. However, between a pair of intermeshing gears, the gear teeth have multiple contacting points as illustrated in the figure 2, and the relative velocities at the contacting points are not zero.

Another big difference is that the present invention is for a rotational guidance system, which does not transfer large torque or heavy load as the gear system.

Comparing with a ball bearing, the present invention uses the geometrical confinement of the non-circular conjugate profile to replace the cage, so that the rolling element can not slip between the center part and the peripheral part.

In one embodiment, all three kinds of components of the rotational guidance microsystem present extremely smooth surface to guarantee optimized friction. In addition, it is necessary to have the right hardness in order to facilitate the assembly, meanwhile to limit or eliminate wear due to contact.

In one embodiment, the rolling element (2) is unique and can be held in a position around its rotational axis B, or can move around the central axis A of the center part. Both of the solutions should not disturb the mechanism of rotating guidance between the rolling element and the center part.

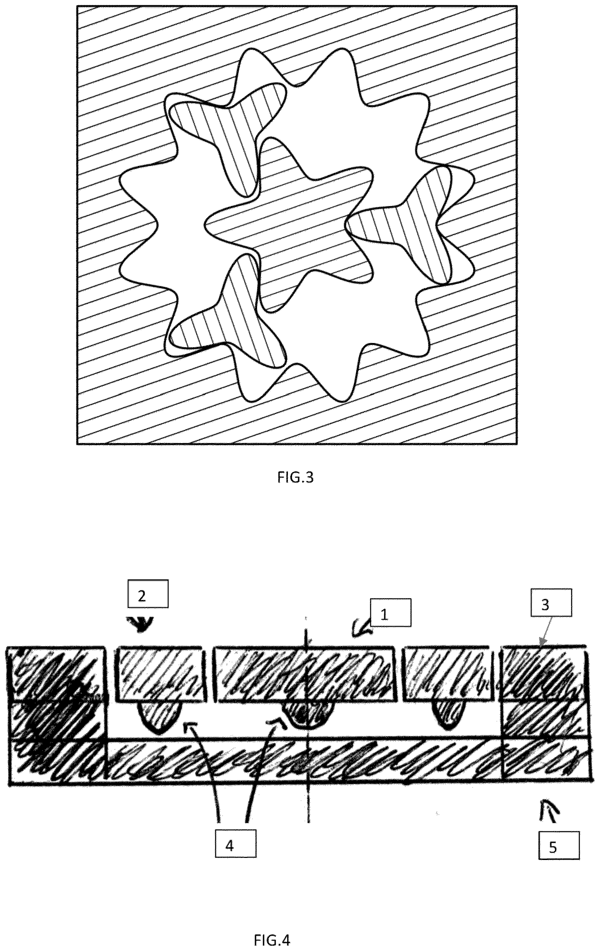

In one embodiment, as illustrated in the figure 3, it is possible to have three rolling elements being placed around the center part in an equilateral triangle form with each rolling element being separated by 120°. This arrangement has the advantage of balancing the forces between the center part and the rolling elements. The figure 3 shows the example with the center part and the rolling elements each in a kind of polygasteroid profile.

The figure 3 is a cross-sectional view of the rotational guidance system, which shows the non-circular shape of all the components in two dimensions (2D). In three dimensions, the components can have a cylinder shape or a segment of a cone shape. In geometry, a generatrix is a line that, when moved along a given path, generates a new shape. The path directing the motion of the generatrix motion is called a directrix. A cone can be generated by moving a line, which is the generatrix, fixed at the future apex of the cone along a closed curve, which is the directrix. The generatrix of a cylinder is a line that is kept parallel to some axis.

In one embodiment, the three-dimensional geometric shape of each component is a cylinder, the directrix of the cylinder presents a non-circular shape, the generatrix of the cylinder is parallel to the rotational axis and is perpendicular to the plane of the directrix.

In another embodiment, the three-dimensional geometric shape of each component is a segment of a cone, the directrix of the cone presents a non-circular shape, the generatrix of the cone passes through the apex of the cone on the rotational axis.

The advantage of the above-embodiments is the thickness reduction. In traditional solutions, the presence of bearing elements and rings races increases largely the thickness in the axis direction, especially the jewels bearings used for pivots in watchmaking. In the present invention, the thickness in the 3$^{rd}$ dimension can be largely reduce so far the coplanar condition of the three kinds of component in the cross-sectional plan is well respected. Thus, having a very thin guidance microsystem is a considerable advantage, especially in watch making industry.

In addition, the small number of parts and their small thickness correspond to a low on-board mass, which gives the advantage in movement guiding and the advantage of a dynamic response at high frequency, for which acceleration is a key criterion of the performance.

In one embodiment, a specific kind of device is installed on the rolling elements to compensate the out-of-plane movements. The figure 4 shows the cross-sectional view in a longitudinal plan of the rotational guidance microsystem. The center part (1) is in the middle, which is in direct contact without slipping with the rolling elements (2) at both sides along the lateral direction. Each rolling element (2) is in direct contact without slipping with the peripheral part (3) along the lateral direction. The three components are coplanar and aligned along the lateral direction. On the center part and the rolling elements, non-contact drop-shaped stoppers (4) are projected along the vertical direction, which is also the axial direction. The center part, the peripheral part and the rolling element with the stoppers are closed by a cover (5). A non-contact stopper (4) can be in various forms, e.g. half-sphere, which only creates a point contact with the surface of the cover (5) when they are in contact. Normally, the stoppers are not in contact with the surface of the cover. In case of shock, for example, a force pushes the rolling elements out of the aligned plane, the stoppers are in contact temporally and punctually with the surface of the cover to push the rolling element back to the aligned plane. In this manner, the stoppers compensate the out-of-plane movements of the rolling elements.

It is possible to fabricate the components of the rotational guidance microsystem with the technics like Nanoelectromechanical system (NEMS) and Microelectromechanical system (MEMS). For example, the deep etching technics in silicon. In fact, the precision of mask engraving and cutting are sufficient for a good number of embodiments in microsystems. It is also possible to nanostructure the surfaces in contact, for example by means of a manufacturing laser, e.g. femtometric, with beam waist < 10 microns to get an extremely smooth surface to get rid of lubrication (oil or grease).

In another embodiment, it is possible to fabricate the components of the rotational guidance microsystem with a matrix of infiltrated vertical nanotubes. The matrix of nanotubes grows vertically on a pattern of catalyst, which is deposited on a substrate by lithography. By designing the pattern on the mask for the lithography, it is possible to realize the matrix of nanotubes in any shape corresponding to the profile of the cross-sectional of the center part, of the rolling elements and of the peripheral part. The thin-walled carbon nanotubes have low Young's modulus, which gives very high flexibility of the material. The infiltration of the matrix of nanotubes can add around the nanotubes a layer of coating, which thickness depends on the infiltration percentage. This coating can adjust the rigidity and the flexibility of the material of the whole matrix.

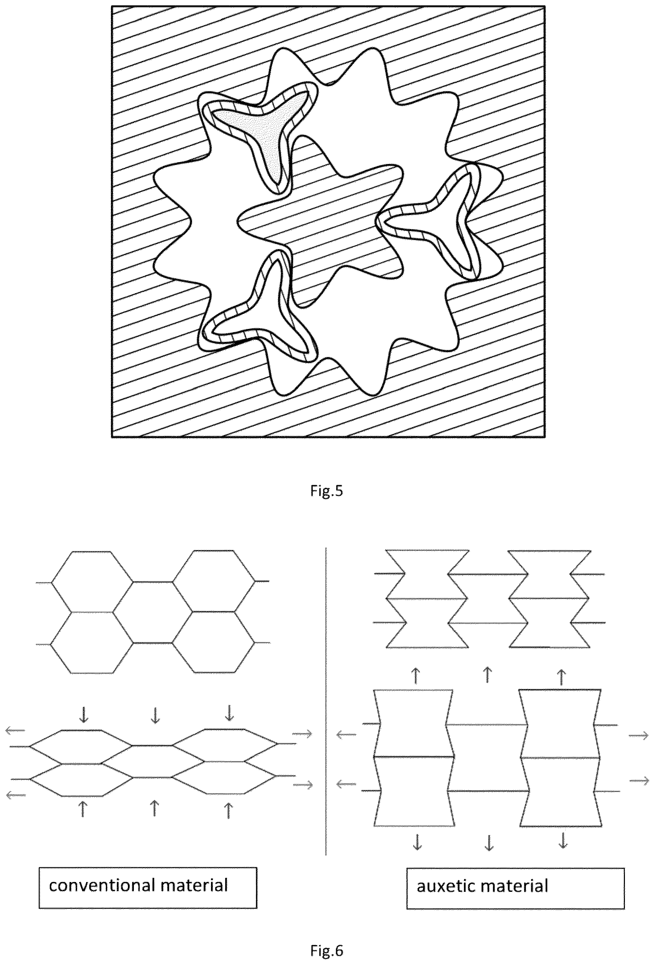

In order to get rid of backlash, the rolling element can be made of a flexible material, or a flexible structure to assemble the system in a prestressed condition. Especially, by designing flexible structure, the flexibility can be largely increased even with normal or rigid material. As illustrated in the figure 5, the rolling element is in a form of a star shaped triangle, which is made with a rigid material, e.g. metal, alloy, plastic. The inner part of the star shaped triangle is hollow with only the outer edge made in the rigid material to gain resilience under mechanical stresses and strains. Thus, the rolling element is flexible.

Auxetic materials is another example of designed flexible structure with standard materials to realize an unexpected behavior under mechanical stresses and strains. When they're stretched in the longitudinal direction, they become thicker in one or several of the perpendicular widthwise directions. The same logic applies in the opposite way: when they are subjected to uniaxial compression, they display a "thinning" in one or several of the transverse directions. The figure 6 shows a comparison between the conventional material and the auxetic material under external contraction. The conventional material presents a design of honeycomb form, which becomes thinner under the stretch. By contrary, the auxetic material presents a design of regular hexagon concave or reentrant form, which becomes thicker under the stretch. Mathematically, a concave polygon has always at least one reflex interior angle, that is an angle with a measure between 180° and 360° exclusive. Here the regular hexagon concave has two parallel sides, and another four sides form two symmetrical reflex interior angles.

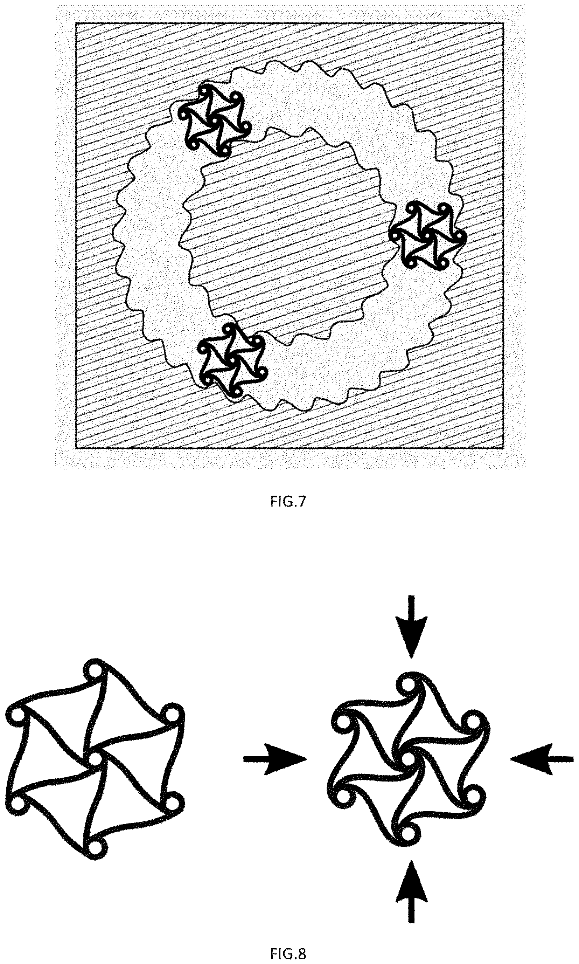

An interesting embodiment is the realization of the rolling element in auxetic material. The figure 7 shows a cross-sectional view in transversal plan of the rotational guidance microsystem with the rolling element made in auxetic material. The conjugate profiles of the center part and of the peripheral part are adapted to the form of the rolling elements. The exact shape for the auxetic material should be calculated by numerical methods and the performance should be validated experimentally. The given example is for illustrative but not limitative purpose.

For each two contacting parts that have conjugate profiles made in the auxetic material, it is possible to assemble them without clearance. During the rotation, the contraction force reduces the sizes of each part at the contacting point, which gives mechanical flexibility to prevent stuck or blockage caused by the size mismatch. It is preferable to have a dynamic homothetic contraction, which requires that the coefficient is around -1 to realize an isotropic effect, and which means that the contraction is homothetic in all directions as illustrated in the figure 8.

One possibility is to fabricate the auxetic material by a matrix of infiltrated vertically grown nanotubes. On the plane of the substrate, the catalyst is deposited in the pattern of the auxetic material as illustrated in the figure 8. The matrix of nanotubes grows vertically on the catalyst along the Z direction to reach a height between several hundred nanometers, to micrometers, even to millimeters. The height of the matrix determines the height of the rolling element in Z direction. It is also possible to vary the thickness of the wall and the sides at different places of the auxetic structure by adjusting the pattern of the catalyst. As the pattern is defined by the mask of the lithography, it is at the step of mask design to determine the thickness of the lines in the mask. The design of different thickness of the walls and the sides at different places of the auxetic structure can help to achieve the dynamic homothetic contraction. The infiltration of the matrix of nanotubes can define the stiffness of the material, which is a parameter inverse to the flexibility of the material.

Anti-shock

In general, all kinds of flexible element can help to get anti-shock effect. The auxetic structure is used here as a concrete example to illustrate the anti-shock mechanism. The rolling element with internal auxetic structure is resilient, which can restore its initial position and form after deformation and movement. It is necessary to calculate the stiffness of the rotating elements so that the rolling elements are reversibly deformable under a shock with a certain threshold. Thus, the rolling elements in auxetic material/structure can eliminate the clearance and generate an anti-shock mechanism.

It is also possible to have all the three components are in auxetic material, so that all of them together absorb the shock. In an ideal case, only shape deformation happens without bending or position displacing so that all the components are always aligned in a coplanar configuration and not cutting force will kick any component out of the plane.

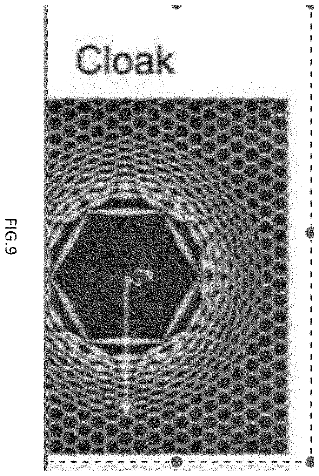

In another anti-shock embodiment, the rotational guidance microsystem can be put in the center of another shock isolation mechanism. One such kind of example is a cylinder called "mechanical invisibility cloak" (CMI). MICs are well known to opticians and geophysicists to isolate the external waves, no matter light waves, sonic waves, mechanical waves. The idea is illustrated in the figure 9 to construct a circular and concentric/coaxial meta-structure, which is a three-dimensional structure made up of symmetrical microelements, for example small parallelepipeds added to the surface of the disc. The parallelepipeds are arranged following concentric/coaxial circles from the outside of the support disc towards the inside, at a variable pitch so that the pitch gets closer as approaching the center (pitch not constant). In the same way, the parallelepipeds have a density (volume) increasing inversely to the radius of arrangement so that the closer to the center, the denser the parallelepipeds elements. The rotational guidance microsystem is fixed in the center of the disc. Under a shock, a mechanical energy is transmitted as a mechanical wave through the parallelepipeds according to the principle of momentum conservation. Upon reaching the invisibility cloak, the wave relaxes and energetically degrades forming a static "shock absorber." Obviously, the pitch of the parallelepipeds their dimension, the pitch of the discs needs to be calculated numerically and tested experimentally. The MIC can be realized in the conventional NEMS or MEMS methods in deep etching in silicon. Another possibility is to use a matrix of infiltrated carbon nanotubes.

**Claims**

**1.** Rotational guidance microsystem for constraining relative motion of the microsystem, comprising three kinds of components:

- A center part (1), a peripheral part (3) and at least one rolling element (2),
- the center part and the peripheral part defining a space in-between with the rolling element being mobile in the space between the center part and the peripheral part,
- the center part rotating around a rotational axis,
- the cross-sections of the three-dimensional geometric shapes of the center part, the peripheral part and the said rolling element are coplanar,

Wherein:

- the cross-section of the center part and the rolling element has respectively a non-circular two-dimensional shape in the transversal plan that is perpendicular to the rotational axis, the non-circular two-dimensional shapes of the center part and the rolling element are in direct physical contact at a first contacting point with the relative velocity being zero at this first contacting point,
- the cross-section of the rolling element and the peripheral part has respectively a non-circular two-dimensional shape in the transversal plan that is perpendicular to the rotational axis, the non-circular two-dimensional shapes of the rolling element and the peripheral part are in direct physical contact at a second contacting point with the relative velocity being zero at this second contacting point.

2. Rotational guidance microsystem of the claim 1, wherein the three-dimensional geometric shape is a cylinder, the directrix of the cylinder presents a non-circular shape, the generatrix of the cylinder is parallel to the rotational axis and is perpendicular to the plane of the directrix.

3. Rotational guidance microsystem of claim 1, wherein the three-dimensional geometric shape is a segment of a cone, the directrix of the cone presents a non-circular shape, the generatrix of the cone passes through the apex of the cone on the rotational axis.

4. Rotational guidance microsystem of the claim 1, wherein the non-circular two-dimensional shape in the transversal plan of each kind of components presents a polygasteroid profile.

5. Rotational guidance microsystem of the claim 1, wherein there are multiple rolling elements positioned symmetrically around the center part.

6. Rotational guidance microsystem of the precedent claim, wherein there are three rolling elements positioned symmetrically around the center part, each rolling element being separated by 120°.

7. Rotational guidance microsystem of the precedent claim, wherein non-contact stoppers are installed on the center part and the rolling element to eliminate the influence from off-plane force.

8. Rotational guidance microsystem of the claim 1, wherein the at least one rolling element is made of auxetic material to eliminate clearance.

9. Rotational guidance microsystem of the precedent claim, wherein the auxetic material is homothetic, who has a Poisson coefficient around -1.

10. Rotational guidance microsystem of the claim 1, wherein the three kinds of components are made of flexible elements to realize a function of anti-shock.

11. Rotational guidance microsystem of the precedent claim, wherein the flexible elements are in auxetic material.

12. Rotational guidance microsystem of the claim 1, wherein the three components are made of infiltrated carbon nanotubes array.

13. Rotational guidance microsystem of the claim 1, wherein the three components are made by deep etching in a silicon wafer (NEMS, MEMS).

14. Rotational guidance microsystem of the claim 1, wherein the three components are made by femtosecond laser sculpturing in steel alloys, titanium alloys, ceramic and glass.


**Patentansprüche**

1. Drehführungsmikrosystem zum Einschränken einer Relativbewegung des Mikrosystems, umfassend drei Arten von Komponenten:

- ein Mittelteil (1), ein Umfangsteil (3) und mindestens ein Rollelement (2),

- wobei das Mittelteil und das Umfangsteil einen Zwischenraum definieren, wobei das Rollelement in dem Raum zwischen dem Mittelteil und dem Umfangsteil beweglich ist,
- wobei das Mittelteil sich um eine Drehachse dreht,
- wobei die Querschnitte der dreidimensionalen geometrischen Formen des Mittelteils, des Umfangsteils und des Rollelements koplanar sind,

wobei:

- der Querschnitt des Mittelteils und des Rollelements jeweils eine nicht kreisförmige zweidimensionale Form in der Querebene, die zu der Drehachse senkrecht ist, aufweist, die nicht kreisförmigen zweidimensionalen Formen des Mittelteils und des Rollelements an einem ersten Kontaktpunkt in direktem physischen Kontakt stehen, wobei die Relativgeschwindigkeit an diesem ersten Kontaktpunkt null beträgt,
- der Querschnitt des Rollelements und des Umfangsteils jeweils eine nicht kreisförmige zweidimensionale Form in der Querebene, die zu der Drehachse senkrecht ist, aufweist, die nicht kreisförmigen zweidimensionalen Formen des Rollelements und des Umfangsteils an einem zweiten Kontaktpunkt in direktem physischen Kontakt stehen, wobei die Relativgeschwindigkeit an diesem zweiten Kontaktpunkt null beträgt.

2. Drehführungsmikrosystem nach Anspruch 1, wobei die dreidimensionale geometrische Form ein Zylinder ist, die Leitlinie des Zylinders eine nicht kreisförmige Form vorweist, die Erzeugende des Zylinders parallel zu der Drehachse ist und senkrecht zu der Ebene der Leitlinie ist.

3. Drehführungsmikrosystem nach Anspruch 1, wobei die dreidimensionale geometrische Form ein Segment eines Kegels ist, die Leitlinie des Kegels eine nicht kreisförmige Form vorweist, die Erzeugende des Kegels durch die Spitze des Kegels auf der Drehachse verläuft.

4. Drehführungsmikrosystem nach Anspruch 1, wobei die nicht kreisförmige zweidimensionale Form in der Querebene jeder Art von Komponenten ein Polygasteroidprofil vorweist.

5. Drehführungsmikrosystem nach Anspruch 1, wobei es mehrere Rollelemente gibt, die um das Mittelteil symmetrisch positioniert sind.

6. Drehführungsmikrosystem nach dem vorstehenden Anspruch, wobei es drei Rollelemente gibt, die um das Mittelteil symmetrisch positioniert sind, wobei jedes Rollelement um 120° voneinander getrennt ist.

7. Drehführungsmikrosystem nach dem vorstehenden Anspruch, wobei berührungslose Anschläge an dem Mittelteil und dem Rollelement angebracht sind, um den Einfluss einer Kraft außerhalb der Ebene zu vermeiden.

8. Drehführungsmikrosystem nach Anspruch 1, wobei das mindestens eine Rollelement aus auxetischem Material hergestellt ist, um Spiel zu vermeiden.

9. Drehführungsmikrosystem nach dem vorstehenden Anspruch, wobei das auxetische Material homothetisch ist, das einen Poisson-Koeffizienten um -1 herum aufweist.

10. Drehführungsmikrosystem nach Anspruch 1, wobei die drei Arten von Komponenten aus flexiblen Elementen hergestellt sind, um eine Stoßdämpferfunktion zu erzielen.

11. Drehführungsmikrosystem nach dem vorstehenden Anspruch, wobei die flexiblen Elemente aus auxetischem Material bestehen.

12. Drehführungsmikrosystem nach Anspruch 1, wobei die drei Komponenten aus einer Anordnung infiltrierter Kohlenstoffnanoröhren hergestellt sind.

13. Drehführungsmikrosystem nach Anspruch 1, wobei die drei Komponenten durch Tiefätzung in einer Siliziumscheibe (NEMS, MEMS) hergestellt werden.

14. Drehführungsmikrosystem nach Anspruch 1, wobei die drei Komponenten durch Femtosekundenlaserformung aus Stahllegierungen, Titanlegierungen, Keramik und Glas hergestellt werden.

**Revendications**

1. Microsystème de guidage en rotation permettant de limiter un mouvement relatif du microsystème, comprenant trois types de composants :

   - une partie centrale (1), une partie périphérique (3) et au moins un élément roulant (2),
   - la partie centrale et la partie périphérique définissant un espace entre les deux, l'élément roulant étant mobile dans l'espace entre la partie centrale et la partie périphérique,
   - la partie centrale tournant autour d'un axe de rotation,
   - les sections transversales des formes géométriques tridimensionnelles de la partie centrale, de la partie périphérique et dudit élément roulant sont coplanaires,

   dans lequel :

   - la section transversale de la partie centrale et de l'élément roulant a respectivement une forme bidimensionnelle non circulaire dans le plan transversal qui est perpendiculaire à l'axe de rotation, les formes bidimensionnelles non circulaires de la partie centrale et de l'élément roulant sont en contact physique direct au niveau d'un premier point de contact, la vitesse relative étant nulle au niveau de ce premier point de contact,
   - la section transversale de l'élément roulant et de la partie périphérique a respectivement une forme bidimensionnelle non circulaire dans le plan transversal qui est perpendiculaire à l'axe de rotation, les formes bidimensionnelles non circulaires de l'élément roulant et de la partie périphérique sont en contact physique direct au niveau d'un second point de contact, la vitesse relative étant nulle au niveau de ce second point de contact.

2. Microsystème de guidage en rotation selon la revendication 1, dans lequel la forme géométrique tridimensionnelle est un cylindre, la directrice du cylindre présente une forme non circulaire, la génératrice du cylindre est parallèle à l'axe de rotation et est perpendiculaire au plan de la directrice.

3. Microsystème de guidage en rotation selon la revendication 1, dans lequel la forme géométrique tridimensionnelle est un segment d'un cône, la directrice du cône présente une forme non circulaire, la génératrice du cône passe par l'apex du cône sur l'axe de rotation.

4. Microsystème de guidage en rotation selon la revendication 1, dans lequel la forme bidimensionnelle non circulaire dans le plan transversal de chaque type de composants présente un profil polygastéroïde.

5. Microsystème de guidage en rotation selon la revendication 1, dans lequel il y a de multiples éléments roulants positionnés symétriquement autour de la partie centrale.

6. Microsystème de guidage en rotation selon la revendication précédente, dans lequel il y a trois éléments roulants positionnés symétriquement autour de la partie centrale, chaque élément roulant étant séparé de 120°.

7. Microsystème de guidage en rotation selon la revendication précédente, dans lequel des butées sans contact sont installées sur la partie centrale et l'élément roulant pour éliminer l'influence d'une force hors plan.

8. Microsystème de guidage en rotation selon la revendication 1, dans lequel l'au moins un élément roulant est constitué d'un matériau auxétique pour éliminer le jeu.

9. Microsystème de guidage en rotation selon la revendication précédente, dans lequel le matériau auxétique est homothétique, qui a un coefficient de Poisson d'environ -1.

10. Microsystème de guidage en rotation selon la revendication 1, dans lequel les trois types de composants sont constitués d'éléments flexibles pour réaliser une fonction d'antichoc.

11. Microsystème de guidage en rotation selon la revendication précédente, dans lequel les éléments flexibles sont en matériau auxétique.

12. Microsystème de guidage en rotation selon la revendication 1, dans lequel les trois composants sont constitués d'un réseau de nanotubes de carbone infiltrés.

**13.** Microsystème de guidage en rotation selon la revendication 1, dans lequel les trois composants sont fabriqués par gravure profonde dans une plaquette de silicium (NEMS, MEMS).

**14.** Microsystème de guidage rotatif selon la revendication 1, dans lequel les trois composants sont fabriqués par sculpture au laser femtoseconde dans des alliages d'acier, alliages de titane, céramique et verre.

FIG.1

FIG.2

FIG.3

FIG.4

Fig.5

conventional material

auxetic material

Fig.6

FIG.7

FIG.8

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010297391 A1